# EUROPÄISCHE PATENTSCHRIFT

(11) **EP 0 760 603 B1**
(45) Veröffentlichungstag und Bekanntmachung des Hinweises auf die Patenterteilung: **02.09.1998**
(21) Anmeldenummer: 95920698.8
(22) Anmeldetag: 29.05.1995
(51) Int. Cl.: A21B 1/48, A21C 15/02

(54) **VERFAHREN UND VORRICHTUNG ZUM HERSTELLEN VON GEROLLTEN WAFFELTÜTEN ODER DERGLEICHEN**
PROCESS AND DEVICE FOR PRODUCING ROLLED WAFER CONES OR THE LIKE
PROCEDE ET DISPOSITIF DE FABRICATION DE CORNETS DE GLACE ENROULES OU SIMILAIRE

(30) Priorität: 27.05.1994 AT 1088/94
(43) Veröffentlichungstag der Anmeldung: 12.03.1997
(73) Patentinhaber: FRANZ HAAS WAFFELMASCHINEN INDUSTRIEGESELLSCHAFT M.B.H., 1210 Wien (AT)
(72) Erfinder: HAAS, Franz, sen., A-1210 Wien (AT); HASS, Johann, A-3400 Klosterneuburg (AT)
(74) Vertreter: Berger, Erhard, Dr.
(86) Internationale Anmeldenummer: AT9500108
(87) Internationale Veröffentlichungsnummer: WO9532630

(56) Entgegenhaltungen:
- EP-A- 0 211 356
- US-A- 2 745 363
- US-A- 4 280 402

## Beschreibung

Die Erfindung betrifft Verfahren und Anlagen zum Herstellen von Waffein für Eiscreme, wie gerollte Waffeltüten, gerate Waffelrollen, tiefgezogene Waffelbecher, tiefgezogene Waffeltassen und dergleichen.

Bei diesem Verfahren wird ein hoch zuckerhaltiger Teig auf einer endlosen, sich kontinuierlich bewegenden, beheizten Backfläche zu einem endlosen Waffelband gebacken, welches im plastisch verformbaren Zustand in einzelne Waffelstücke zerteilt wird, die ihrerseits im plastisch verformbaren Zustand in die für die Waffeln vorgesehene dreidimensionale Gestalt umgeformt werden.

Aus der EP-A-0 211 356 ist die Herstellung von becherförmigen Eiswaffeln bekannt, wobei in einer Erzeugungsstation zuerst einzelne, im wesentlichen ebene Waffelblätter aus hoch zuckerhaltigem Teig hergestellt werden und der für die dreidimensionale Formgebung der Waffelbecher erforderliche Umformvorgang in einer der Erzeugungsstation nachgeordneten Verarbeitungsstation am jeweiligen Waffelblatt ausgeführt wird, wobei ein Teil des Waffelblattes eingerollt und ein anderer Teil in die für den Becherboden vorgesehene Gestalt gedrückt wird. Der so hergestellte Becher besitzt eine, vom eingerollten Teil des Waffelblattes gebildete Seitenwand, deren Dicke der Dicke des Waffelblattes oder einem Vielfachen dieser Dicke entspricht, und einen geformten, abgeflachten und vorzugsweise konkaven Boden mit einer Bodenkante, die das Aufsetzen des Bechers auf einer Fläche erleichtert. Die einzelnen Waffelblätter werden entweder einzeln in zweiteiligen Waffelbackformen aus hoch zuckerhaltigem Teig gebacken, oder durch Zerteilen eines, aus hoch zuckerhaltigem Teig gebackenen, endlosen Waffelbandes hergestellt. Für die Herstellung eines solchen Waffelbandes offenbart die EP-A-0 211 356 eine Backvorrichtung mit einer endlosen, sich kontinuierlich bewegenden, beheizten Backfläche, entlang deren Bahn zumindest eine Teigaufgießvorrichtung zum Aufgießen des Teiges auf die Backfläche und eine beheizte Backstrecke zum Backen des aufgegossenen Teigbandes in Bewegungsrichtung der Backfläche hintereinander angeordnet sind.

Gerollte Waffeltüten für Eiscreme werden überwiegend in Waffelbackautomaten hergestellt, bei denen zuerst ein hoch zuckerhaltiger Teig in zweiteiligen Waffelbackformen, die in zu einer endlosen Zangenkette zusammengeschlossen Waffelbackzangen aufgenommen sind, die nach automatischem Teigaufguß kontinuierlich durch einen beheizten Ofenraum transportiert werden, zu einzelnen fächerförmigen Waffelfladen gebacken wird und jeder gebackene Waffelfladen nach dem Öffnen der jeweiligen Waffelbackzange automatisch abgenommen, einer Einrollvorrichtung zugeführt und zu einer Tüte eingerollt wird. Die so hergestellten Eistüten ergeben ein schmackhaftes knuspriges Waffelgebäck, das sich nach dem Füllen mit Eiscreme ideal für den unmittelbaren Verzehr, z.B. in Eisbars od. dgl. eignet.

Der größte Teil der geraten Waffeltüten wird jedoch industriell mit Eiscreme gefüllt, verpackt, tiefgekühlt und bis zur Verteilung im Kühlhaus gelagert. Auch beim Verteiler werden solche Produkte in Tiefkühltruhen gelagert und daraus abgegeben.

Der Zeitraum von der industriellen Füllung der Waffeltüten mit Eiscreme bis zum Verzehr durch den Konsumenten beträgt im Schnitt einige Wochen. Während dieser Zeit nehmen die Waffeltüten zufolge ihrer Porosität Feuchtigkeit auf und verlieren dadurch ihren guten Geschmack und vor allem ihre Knusprigkeit.

Die vorliegende Erfindung hat sich nun zum Ziel gesetzt, diesen Nachteil zu beseitigen und Waffeln insbesanders für die industrielle Füllung mit Eiscreme zur Verfügung zu stellen, die auch nach mehrwöchiger Tiefkühllagerung beim Verzehr einen guten Geschmack und eine für Waffelprodukte charakteristische Knusprigkeit aufweist.

Dies wird durch ein Verfahren zum Herstellen von Waffeln für Eiscreme, wie gerollte Waffeltüten, gerollte Waffelrollen, tiefgezogene Waffelbecher, tiefgezogene Waffeltassen und dergleichen erreicht, bei welchem ein hoch zuckerhaltiger Teig auf einer endlosen, sich kontinuierlich bewegenden, beheizten Backfläche zu einem endlosen Waffelband gebacken wird, welches im plastisch verformbaren Zustand in einzelne Waffelstücke zerteilt wird, die ihrerseits im plastisch verformbaren Zustand in die für die Waffeln vorgesehene dreidimensionale Gestalt umgeformt werden. Dieses Verfahren ist erfindungsgemäß dadurch gekennzeichnet, daß der hoch zuckerhaltige Teig zu einem dicken Teigband auf die endlose, beheizte Backfläche aufgegossen wird und auf dieser zu einem dicken, vorzugsweise ein bis mehrere Millimeter dicken Waffelband gebacken wird und daß das gebackene Waffelband im plastisch verformbaren Zustand, vorzugsweise bis auf maximal zwei Drittel seiner ursprünglichen Dicke, verdichtet und entweder gleichzeitig mit dem Verdichten oder nach dem Verdichten in die einzelnen Waffelstücke zerteilt wird.

Ein weiterer erheblicher Vorteil des erfindungsgemäßen Verfahrens besteht darin, daß man die Produktionsgeschwindigkeit gegenüber dem Ausbacken in einzelnen Formen erheblich steigern kann.

Eine Variante des erfindungsgemäßen Verfahrens sieht vor, daß das Teigband während der gesamten Backzeit an seiner Unterseite durch die endlose, sich kontinuierlich bewegende, beheizte Backfläche beheizt wird, während seine Oberseite zuerst zum ungehinderten Ausgasen unbeheizt bleibt und zumindest im letzten Viertel der Backzeit auch an seiner Oberseite beheizt wird, um auch die Oberseite des Teigbandes zu Bräunen und um das gebackene Teigband plastisch verformbar zu machen. Das so hergestellte, gebackene Teig- bzw. Waffelband weist an seiner, auf der beheizten Backfläche aufliegenden Unterseite eine wesentlich größere Dichte und eine praktisch porenfreie Oberfläche auf, da das Teigband während des Backprozesses auf seiner unbeheizten Oberseite leicht Ausgasen kann. Die an der Oberseite des Teigbandes offenen Poren werden beim nachfolgenden Verdichten und Prägen verschlossen. Die aus den fächerförmigen Waffelstücken dieses gebackenen Waffelbandes gerollten Waffeltüten weisen eine wesentlich höhere Beständigkeit gegen das Eindringen von Feuchtigkeit auf als gerollte Waffeltüten, deren zur Tüte eingerollter Waffelfladen aus demselben Waffelteig mit derselben Teigrezeptur aber wie bisher üblich zwischen zwei beheizten Backplatten gebacken wurde.

Eine Variante des erfindungsgemäßen Verfahrens sieht vor, daß der Waffelteig in zwei oder mehreren Schritten mehrschichtig aufgegossen wird. Der zwei oder mehrschichtige Teigaufguß ergibt ein weniger Poren aufweisendes Teigband, da durch den mehrmaligen Aufguß die einzelne Teigschicht leichter entgasen kann, bzw. der Entgasungsprozeß des zuerst aufgegossenen Teigfilms bis zum Aufgießen des zweiten Teigfilmes bereits weitgehend abgeschlossen ist. Außerdem ermöglicht der zwei- oder mehrfache Teigaufguß auch eine optische Gestaltung des gebackenen Teigbandes, z.B. 2-färbig in Streifen oder Punktform usw.

Eine weitere Variante des erfindungsgemäßen Verfahrens sieht vor, daß der Waffelteig in Vertiefungen der sich bewegenden heißen Backfläche zu einem endlosen Teigband aufgegossen wird, wobei die Vertiefungen der Backfläche eine Randkontur besitzen, die bereits jener der beim Zerteilen des gebackenen Waffelbandes entstehenden, gebackenen Waffelstücke entspricht. Auf diese Weise wird der beim Zerteilen des gebackenen Waffelbandes in die einzelnen, gebackenen Waffelstücke entstehende Abfall deutlich verringert.

Eine weitere Variante des erfindungsgemäßen Verfahrens sieht vor, daß der Gießstrahl des Waffelteiges zur Bildung eines endlosen Teigbandes, das in seinen Randkonturen aufeinanderfolgende Bogenstücke aufweist, während des Aufgießens quer zur Bewegungsrichtung der heißen Backfläche hin und her bewegt wird. Auf diese Weise können den bogenförmigen Rändern der zu Waffeltüten einzurollenden, gebackenen Waffelstücke entsprechende Randkonturen bereits beim Teigaufguß auf die heiße Backfläche realisiert werden, sodaß das gebackene Waffelband entsprechend den geraden Rändern dieser Waffelstücke ohne nennenswerten Backabfall zick-zack-förmig zerteilt werden kann.

Eine weitere Variante des erfindungsgemäßen Verfahrens sieht vor, daß das dicke, gebackene Waffelband in seinem plastisch verformbaren Zustand durch Walzen verdichtet wird.

Eine weitere Variante des erfindungsgemäßen Verfahrens sieht vor, daß das dicke, gebackene Waffelband in seinem plastisch verformbaren Zustand durch Walzprägen verdichtet wird.

Eine weitere Variante des erfindungsgemäßen Verfahrens sieht vor, daß die Verdichtung im wesentlichen nur durch die erhabenen Teile der Prägewalze erfolgt.

Eine weitere Variante des erfindungsgemäßen Verfahrens sieht vor, daß beim Verdichten des dicken, gebackenen Waffelbandes in seinem plastisch verformbaren Zustand gleichzeitig ein Muster auf dieses Waffelband aufgeprägt wird.

Eine weitere Variante des erfindungsgemäßen Verfahrens sieht vor, daß die Verdichtung bei einer Temperatur erfolgt, die in etwa der Backtemperatur entspricht.

Beim Verdichten im Preß- und Walzwerk werden die im Gebäckband vorhandenen Poren geschlossen, bzw. die porige Struktur des Teigbandes zerstört, um ein an der Oberfläche möglichst glattes und dadurch feuchtigkeitsunempfindliches Teigband zu erhalten. Außerdem kann ein Walzvorgang unmittelbar in den Herstellungsvorgang des gebackenen Teigbandes integriert werden. Das gebackene Teigband kann entweder direkt auf dem Backgutträger, z.B. einer Trommel, mit einer gegen diesen gedrückten Walze verdichtet und erst im verdichteten Zustand von dem Backgutträger abgenommen werden oder das gebackene Teigband kann vom Backgutträger abgenommen und in einer z.B. aus einem Walzenpaar bestehenden Verdichtungsstation kontinuierlich verdichtet werden.

Eine weitere Variante des erfindungsgemäßen Verfahrens sieht vor, daß das dicke, gebackene Waffelband in seinem plastisch verformbaren Zustand durch Walzprägen verdichtet und gleichzeitig mit dem Verdichten durch Walzprägen in die einzelnen, gebackenen, im wesentlichen ebenen Waffelstücke zerteilt wird. Dabei wird in einem Arbeitsgang das dicke, gebackene Teigband durch Verdichten porenärmer gemacht, gleichzeitig das Waffelmuster, oder ein Name oder ein Zeichen in das dicke, gebackene Teigband eingeprägt und das dicke, gebackene Teigband in formgerechte Teile zerteilt und gleichzeitig werden dabei die Ränder beschnitten.

Das erfindungsgemäße Verfahren ist sowohl auf die Herstellung von gerollten Waffeltüten als auch auf die Herstellung von gerollten Waffelröllchen, tiefgezogenen Waffelbechern, tiefgezogenen Waffeltassen und dergleichen für die industrielle Füllung mit Eiscreme und die Lagerung im tiefgekühlten Zustand anwendbar.

Beim erfindungsgemäßen Verfahren wird vorteilhafterweise ein flüssiger Waffelteig mit 25 bis 100 Gew.-% Zucker, bezogen auf den Mehl- bzw. Stärkeanteil eingesetzt. Die Backzeit beträgt vorteilhafterweise 180 bis 360 Sekunden und die Backtemperatur vorteilhafterweise etwa 150 bis 210 °C.

In weiterer Ausgestaltung der Erfindung wird eine Anlage zum Herstellen von Waffeln für Eiscreme, wie gerollte Waffeltüten, gerollte Waffelrollen, tiefgezogene Waffelbecher, tiefgezogene Waffeltassen und dergleichen vorgeschlagen. Diese Anlage ist mit einer Erzeugungsstation zum Herstellen von im wesentlichen ebenen, im backwarmen Zustand plastisch verformbaren Waffelstücken und einer nachgeordnete Verarbeitungsstation versehen, in der die im wesentlichen ebenen Waffelstücke im plastisch verformbaren Zustand in die für die Waffeln vorgesehene, dreidimensionale Gestalt umgeformt werden. In der Erzeugungsstation ist eine Backvorrichtung zum Herstellen eines endlosen, im backwarmen Zustand plastisch verformbaren Waffelbandes aus hoch zuckerhaltigem Teig vorgesehen, welche eine endlose, sich kontinuierlich bewegende, beheizte Backfläche umfaßt, entlang deren Bahn zumindest eine Teigaufgießvorrichtung zum Aufgießen des Teiges auf die Backfläche und eine beheizte Backstrecke zum Backen des aufgegossenen Teigbandes in Bewegungsrichtung der Backfläche hintereinander angeordnet sind. Diese Anlage ist erfindungsgemäß dadurch gekennzeichnet, daß die Erzeugungsstatian eine Backvorrichtung zum Herstellen eines dicken, vorzugsweise ein bis mehrere Millimeter dicken Waffelbandes und eine Bearbeitungsstation für dieses Waffelband umfaßt, in der das gebackene Waffelband verdichtet und gleichzeitig mit dem Verdichten oder nach dem Verdichten in einzelne Waffelstücke zerteilt wird, die in der Verarbeitungsstation im plastisch verformbaren Zustand in die für die Waffeln vorgesehene, dreidimensionale Gestalt umgeformt werden.

Gemäß einem weiteren Merkmal der Erfindung kann vorgesehen sein, daß die Bearbeitungsstation für das dicke, gebackene Waffelband an der Bahn der sich bewegenden Backfläche der Backvorrichtung angeordnet ist und der beheizten Backstrecke der Backvorrichtung nachgeordnet ist.

Gemäß einem weiteren Merkmal der Erfindung kann vorgesehen sein, daß in der Bearbeitungsstation für das dicke, gebackene Waffelband eine Prägewalze für den Eingriff mit der Oberseite des, mit seiner Unterseite auf der endlosen Backfläche aufliegenden, gebackenen Waffelbandes vorgesehen ist.

Gemäß einem weiteren Merkmal der Erfindung kann vorgesehen sein, daß die Bearbeitungsstation für das dicke, gebackene Waffelband dieses in die einzelnen Waffelstücke zerteilt und die Verarbeitungsstation eine die einzelnen Waffelstücke aus der Bearbeitungsstation entfernende Abnahmevorrichtung umfaßt.

Gemäß einem weiteren Merkmal der Erfindung kann vorgesehen sein, daß die Bearbeitungsstation für das dicke, gebackene Waffelband der Backvorrichtung nachgeordnet ist und eine mit der Oberseite des gebackenen Waffelbandes in Eingriff bringbare Prägewalze und eine mit der Unterseite des gebackenen Waffelbandes in Eingriff bringbare Gegenwalze umfaßt.

Gemäß einem weiteren Merkmal der Erfindung kann vorgesehen sein, daß die Gegenwalze als Beölungswalze für die Unterseite des Waffelbandes bzw. der Waffelstücke ausgebildet ist.

Gemäß einem weiteren Merkmal der Erfindung kann vorgesehen sein, die Prägewalze mit der Form der Waffelstücke entsprechenden Schneidkanten versehen ist.

Gemäß einem weiteren Merkmal der Erfindung kann vorgesehen sein, daß die Prägewalze mit einem Waffelprägemuster versehen ist.

Gemäß einem weiteren Merkmal der Erfindung kann vorgesehen sein, daß zur Herstellung des dicken Waffelbandes in die sich kontinuierlich bewegende, beheizte Backfläche der Backvorrichtung in Bewegungsrichtung der Backfläche aufeinanderfolgende Vertiefungen eingelassen sind, deren räumliche Gestalt den einzelnen Waffelstücken entspricht.

Gemäß einem weiteren Merkmal der Erfindung kann vorgesehen sein, daß die Backvorrichtung zum Herstellen des dicken Waffelbandes eine sich mit der beheizten Backstrecke teilweise überschneidende Aufgießstrecke mit zumindest zwei, entlang der Bahn der sich bewegenden Backfläche in Bewegungsrichtung der Backfläche hintereinander angeordneten Teigaufgießvorrichtungen vorgesehen ist.

Gemäß einem weiteren Merkmal der Erfindung kann vorgesehen sein, daß die beheizte Backstrecke zwischen den Teigaufgießvorrichtungen der Aufgießstrecke angeordnete Infrarat-Strahlungsheizvarrichtungen umfaßt.

Nachstehend sind einige Backversuche tabellarisch festgehalten:

| Versuch | I | II | III | IV | V | Versuch | VI |
|---|---|---|---|---|---|---|---|
| Mehl | 100 | 100 | 100 | 100 | 100 | Mehl | 100 |
| Zucker | 20 | 60 | 40 | 60 | 50 | Zucker | 50 |
| Fructose | 5 | - | - | - | - | Fructose | - |
| Salz | 0,3 | - | - | 0,5 | - | Salz | - |
| Milchpulver | 2 | - | - | - | 1 | Milchpulver | - |
| Molke | 6 | 6 | 5 | 6 | 6 | Sojabackmittel | 6 |
| Öl 5 | 6 | 6 | 5 | 3 | Öl | 5 | |
| Wasser | 95 | 87,5 | 98,0 | 85,0 | 90 | Wasser | 105 |
| Stärke | - | - | - | 10 | 10 | Stärke | 10 |
| Backzeit (s) | 205 | 240 | 200 | 240 | 200 | Backzeit (s) | 360 |
| Backtemperatur (°C) (Backtrommel) | 195 | 165 | 175 | 165 | 170 | Backtemperatur (°C) | 160 |

Nachstehend wird die Erfindung anhand von in den angeschlossenen Zeichnungen dargestellten Ausführungsbeispielen von erfindungsgemäßen Anlagen zur Herstellung von gerollten Waffeltüten näher erläutert. In den Zeichnungen zeigen:
- Fig. 1: schematisch eine Seitenansicht einer ersten Ausführungsform einer, mit einer Backtrommel ausgestatteten Anlage zur Herstellung von gerollten Waffeltüten,
- Fig. 2: schematisch eine Seitenansicht einer zweiten Ausführungsform einer, mit einer Backtrommel ausgestatteten Anlage zur Herstellung von gerollten Waffeltüten,
- Fig. 3: schematisch eine, der deutlicheren Darstellung wegen der Breite nach auseinandergezogene Frontalansicht der Backtrommel der Anlage gemäß Fig. 2,
- Fig. 4: schematisch eine, der deutlicheren Darstellung wegen der Breite nach auseinandergezogene Draufsicht auf die Anlage gemäß Fig. 2, wobei nur die Backtrommel und die aus der Bearbeitungsstation ausgetretenen und noch einzurollenden Waffelstücke auf einem Transportband dargestellt sind,
- Fig. 5: schematisch einen Querschnitt durch eine weitere Ausführungsform einer Bearbeitungsstation,
- Fig. 6: schematisch eine Seitenansicht einer, mit einem Durchlaufofen ausgestatteten Anlage zur Herstellung von gerollten Waffeltüten,
- Fig. 7: eine Draufsicht auf Fig. 6,
- Fig. 8: schematisch eine Seitenansicht einer, mit einem Backofen mit einem über zwei Umlenktrommeln geführten endlosen Backband versehenen Anlage zur Herstellung von gerollten Waffeltüten,
- Fig. 9: eine Draufsicht der Anlage gemäß Fig. 8,
- Fig. 10: eine Draufsicht auf das vordere Ende der Anlage gemäß Fig. 8,
- Fig. 11: eine Stirnansicht der Rollvorrichtung der Anlage gemäß Fig. 8 und
- Fig. 12: schematisch eine Ausführungsform einer Rollvorrichtung für eine vierbahnige Anlage zur Herstellung von gerollten Waffeltüten.

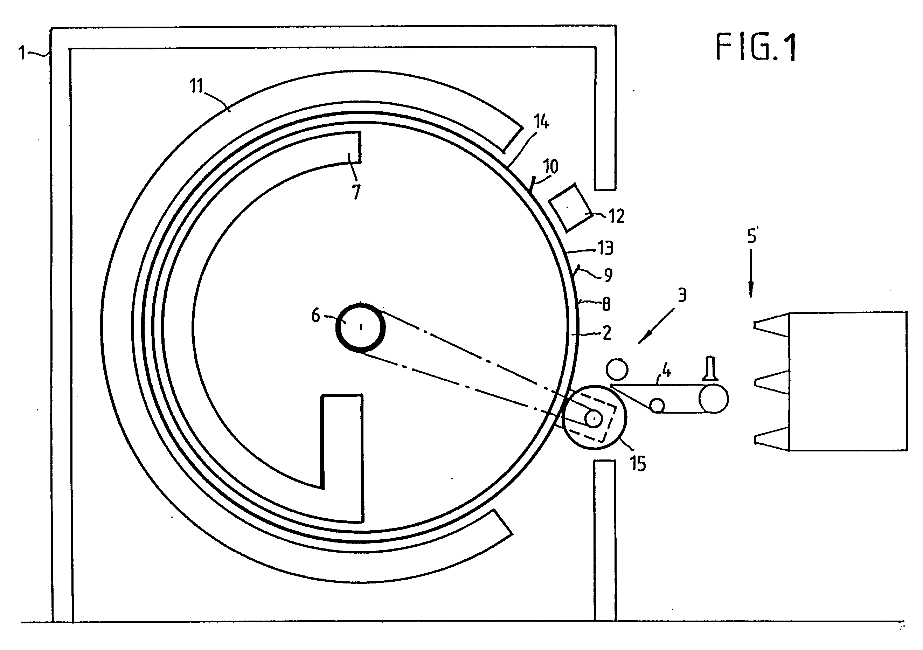

Die in Fig. 1 dargestellte Ausführungsform einer, mit einer Backtrommel ausgestatteten erfindungsgemäßen Anlage zur Herstellung von gerollten Waffeltüten sieht eine Backvorrichtung 1 zum Erzeugen eines dicken, endlosen, plastisch verformbaren, gebackenen Waffelbandes vor, welche eine Backtrommel 2 und eine mit dieser unmittelbar zusammenwirkende Bearbeitungsstation 3 für das gebackene Waffelband umfaßt, in der das gebackene Waffelband auf der Backtrommel 2 in seinem plastisch verformbaren Zustand verdichtet und in einzelne Waffelstücke zerteilt wird. Diese Waffelstücke werden über ein Transportband 4 an eine der Bearbeitungsstation 3 nachgeordnete Verarbeitungsstation 5 übergeben, in der die einzelnen Waffelstücke in ihrem plastisch verformbaren Zustand aus ihrer im wesentlichen ebenen Gestalt in die davon abweichende, räumliche, tütenförmige Gestalt mit Hilfe einer nur schematisch dargestellten Rollvorrichtung umgeformt werden.

Die Backtrommel 2 der Backvorrichtung 1 dreht sich langsam um eine im wesentlichen horizontale Drehachse 6 und wird von innen durch eine, sich entlang des Trommelumfanges erstreckende, innenliegende Heizvorrichtung 7 beheizt. Die Backtrommel 2 bildet mit ihrer glatten Außenfläche eine sich kontinuierlich bewegende, beheizte Backfläche 8 für den Waffelteig. Dieser wird im Bereich der oberen, über der Drehachse 6 gelegenen Trommelhälfte mittels einer, dem vorderen Trommelscheitel benachbarten, vorderen Teigaufgießvorrichtung 9 auf die beheizte Backfläche 8 der Backtrommel 2 aufgegossen.

Ist für die Erzielung der gewünschten Dicke des Teigbandes ein zwei- oder mehrfacher Aufguß des Waffelteiges vorgesehen, so ist die vordere Teigaufgießvorrichtung 9 Teil einer, zwei oder mehrere Teigaufgießvorrichtungen umfassenden, sich in Drehrichtung der Backtrommel 2 erstreckenden Aufgießstrecke, deren zweite Teigaufgießvorrichtung 10 in Drehrichtung der Backtrommel 2 hinter der vorderen Teigaufgießvorrichtung 9 angeordnet ist.

Entlang der Backfläche 8 ist in Drehrichtung der Backtrommel 2 nach der vorderen Teigaufgießvorrichtung 9 eine beheizte Backstrecke vorgesehen, die sich außen rund um die Backtrommel 2 herum erstreckt und eine, z. B. mit Infrarot-Strahlungsheizvorrichtungen versehene, außenliegende Heizvorrichtung 11 zum Beheizen des, auf der Backfläche 8 der Backtrommel 2 aufliegenden, endlosen Teigbandes enthält. Die Heizvorrichtung 11 erstreckt sich von der vorderen Teigaufgießvorrichtung 9 bis in die Nähe der mit der Backtrommel 2 unmittelbar zusammenwirkenden Bearbeitungsstation 3, in der das gebackene Waffelband verdichtet und in die einzelnen Waffelstücke zerteilt wird.

Ist für die Erzielung der gewünschten Dicke des Teigbandes ein zwei- oder mehrfaches Aufgießen des Waffelteiges vorgesehen, so überschneidet sich die beheizte Backstrecke mit der Aufgießstrecke, wobei auch zwischen den einzelnen Teig-Aufgießvorrichtungen 9 und 10 Infrarot-Heizstrahler 12 angeordnet sind.

Zur Herstellung eines dicken, endlosen, plastisch verformbaren Waffelbandes wird aus den Bestandteilen des Waffelteiges ein hoch zuckerhaltiger Waffelteig zubereitet und mit Hilfe der Teigaufgießvorrichtung 9 eine Teigschicht 13 auf die beheizte Backfläche 8 der Backtrommel 2 aufgegossen.

Diese auf der Backfläche 8 haftende Teigschicht 13 wird während der Drehung der Backtrommel 2 auf der Backfläche 8 zu einem endlosen, plastisch verformbaren, Waffelband gebacken, welches im plastisch verformbaren Zustand auf der Backfläche 8 bis zu der, im Bereich des vorderen Trommelscheitels angeordneten Bearbeitungsstation 3 transportiert wird. In dieser wird das gebackene Waffelband mittels einer, mit der Backtrommel 2 als Gegenwalze zusammenwirkenden Form- bzw. Prägewalze 15 verdichtet und geprägt und gleichzeitig in einzelne Waffelstücke zerteilt, welche an das Transportband 4 weitergegeben werden.

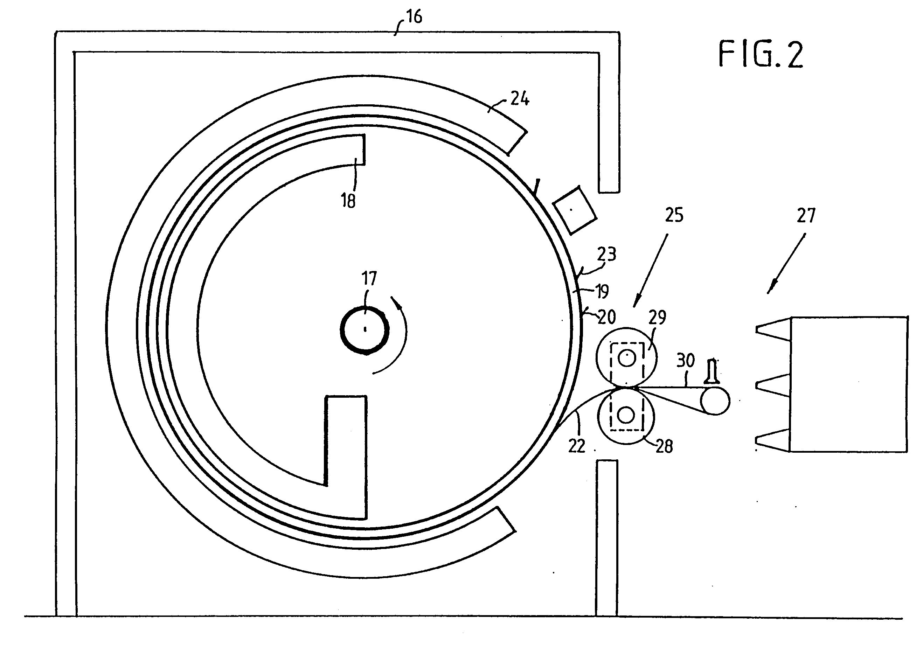

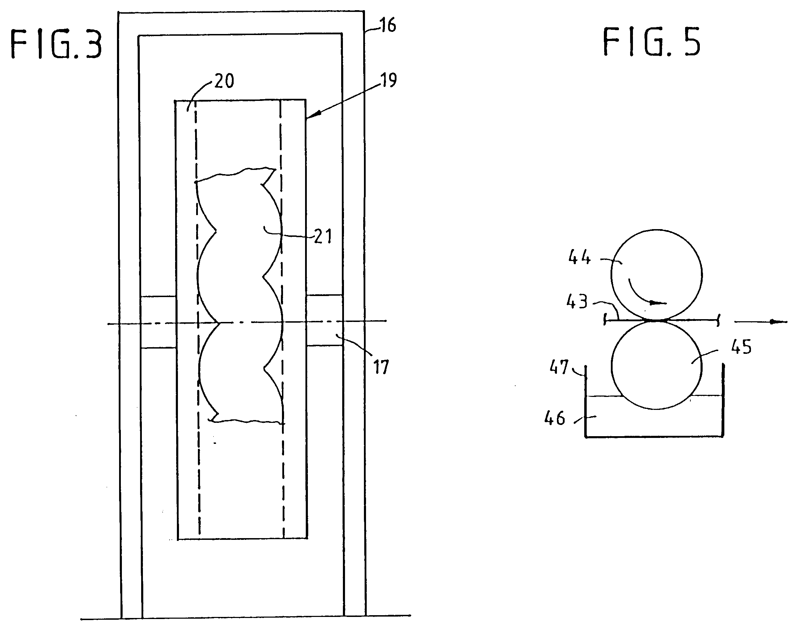

Die Fig. 2 bis 4 zeigen ein weiteres Ausführungsbeispiel einer, mit einer Backtrommel ausgestatteten Anlage zur Durchführung des erfindungsgemäßen Verfahrens. Diese Anlage sieht eine Backvorrichtung 16 mit einer, um eine horizontale Drehachse 17 rotierenden und durch eine innenliegende Heizung 18 beheizte Backtrommel 19 vor, in deren außenliegender Oberfläche 20 eine, über den Trommelumfang umlaufende, endlose, flache Vertiefung 21 eingelassen ist, deren Gestalt einem endlosen Band entspricht, welches aus den einzurollenden und lückenlos aneinandergereihten, fächerförmigen Waffelstücken gebildet ist. Diese mit der flachen Vertiefung 21 versehene Außenfläche 20 der Backtrommel 19 bildet eine sich kontinuierlich bewegende, beheizte Backfläche für den Waffelteig, welcher in dieser Vertiefung 21 der Backtrommel 19 zu einem endlosen, plastisch verformbaren Waffelband 22 gebacken wird, dessen Seitenränder entsprechend den bogenförmigen Rändern der einzurollenden fächerförmigen Waffelstücke mit bogenförmigen Abschnitten versehen sind.

Bei der Backvorrichtung 16 wird der Waffelteig im Bereich der oberen, über der Drehachse 17 der Backtrommel 19 liegenden Trommelhälfte mittels einer Teigaufgießvorrichtung 23 auf die, mit der flachen Vertiefung 21 versehene, beheizte Backfläche 20 aufgegossen, sodaß ein Teigband entsteht, welches mit den bogenförmigen Rändern der einzurallenden Waffelstücke entsprechend geformten Seitenrändern versehen ist. Entlang der Backfläche 20 ist in Drehrichtung der Backtrommel 19 nach der Teigaufgießvorrichtung 23 eine beheizte Backstrecke 24 vorgesehen, welche von einer sich außen rund um die Backtrommel 19 herum bis in die Nähe des vorderen Trommelscheitels erstreckenden Heizvorrichtung gebildet wird, die z. B. mehrere im Abstand von einander angeordnete Infrarotstrahler zum Beheizen des, in der Vertiefung 21 der Backfläche 20 liegenden, endlosen Teigbandes enthält.

Zur Herstellung eines endlosen, plastisch verformbaren, mit bogenförmigen Randabschnitten versehenen Waffelbandes wird von der Teigaufgießvorrichtung 23 ein hoch zuckerhältiger Waffelteig in einer bis zu 3 mm dicken Teigschicht 27 in die Vertiefung 21 der beheizten Backfläche 20 der sich drehenden Backtrommel 21 aufgegossen. Diese bis zu 3 mm dicke Teigschicht wird während der Drehung der Backtrommel 19 zu einem endlosen, plastisch verformbaren Waffelband 22 gebacken, welches im plastisch verformbaren Zustand im Bereich des vorderen Trommelscheitels abgenommen und einer der Backvorrichtung nachgeordneten Bearbeitungsstation 25 zugeführt wird, in der das gebackene Waffelband 22 in seinem plastisch verformbaren Zustand verdichtet und in einzelne, gebackene, im wesentlichen ebene, fächerförmige Waffelstücke 26 zerteilt wird. Der Bearbeitungsstation 25 ist eine Verarbeitungsstation 27 unmittelbar nachgeordnet, in der die einzelnen, fächerförmigen, einzurollenden Waffelstücke 26 in ihrem plastisch verformbaren Zustand aus ihrer im wesentlichen ebenen Gestalt in die davon abweichende, räumliche, tütenförmige Gestalt mit Hilfe zweier, in Fig. 2 nur schematisch in Seitenansicht dargestellter, Rollvorrichtungen umgeformt werden.

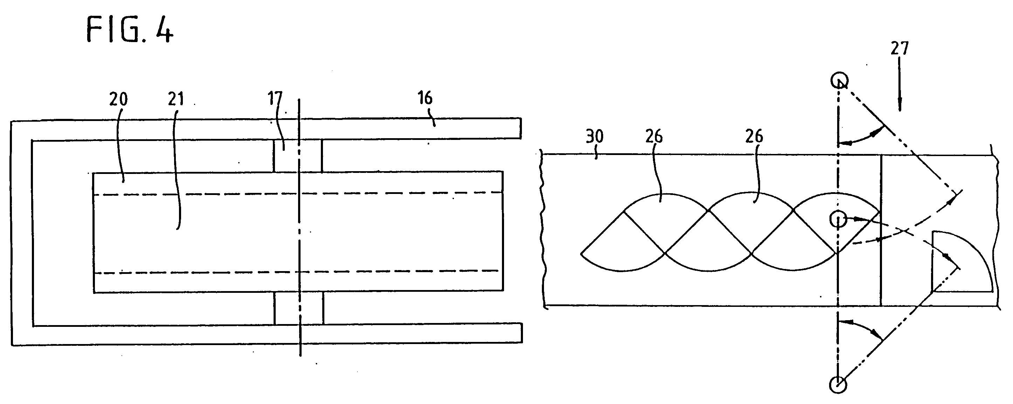

In der Bearbeitungsstation 25 wird das, mit bogenförmigen Randabschnitten versehene, gebackene, endlose Waffelband 22 im plastisch verformbaren Zustand mittels einer, mit einer Gegenwalze 28 zusammenwirkenden Form- bzw. Prägewalze 29 verdichtet und geprägt und gleichzeitig in einzelne, fächerförmige Waffelstücke 26 zerteilt und an ein nachgeordnetes Transportband 30 weitergegeben, auf dem die fächerförmigen Waffelstücke 26 jeweils mit ihren geraden Randkanten seitlich nebeneinanderliegend zur Verarbeitungsstation 27 transportiert werden, wobei jeweils ein fächerförmiges Waffelstücke 26 mit seiner Spitze zwischen den bogenförmigen Randkanten der beiden, zu beiden Seiten benachbarten, fächerförmigen Waffelstücke auf dem Transportband 30 liegt (Fig. 4).

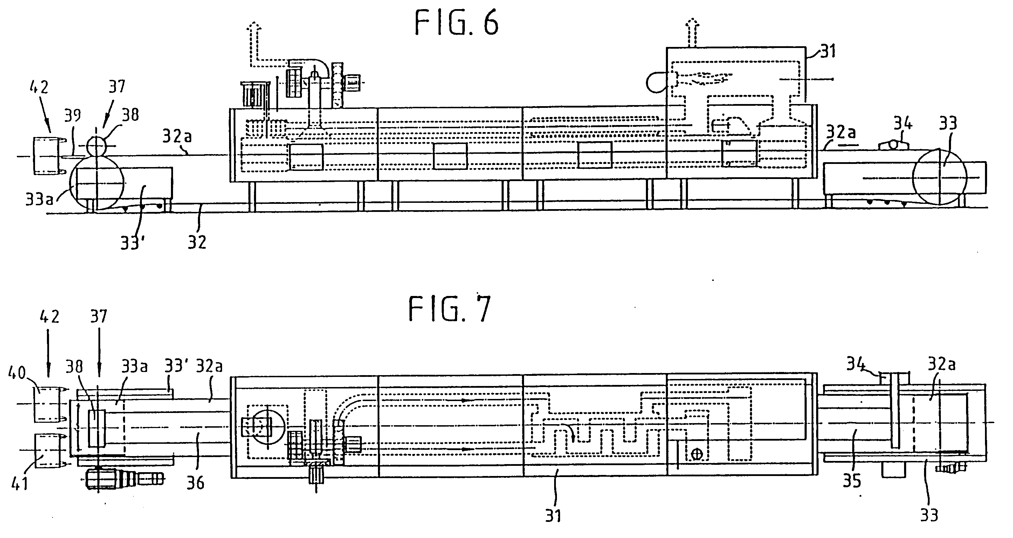

Die Fig. 6 und 7 zeigen ein weiteres Ausführungsbeispiel einer Anlage zur Durchführung des erfindungsgemäßen Verfahrens. Diese Anlage ist mit einem Durchlaufofen 31 mit einem endlosen Backband 32 ausgestattet, dessen oberes Trum 32a durch den Durchlaufofen 31 geführt ist und das an außerhalb des Durchlaufofen 31 angeordneten Umlenkstationen 33, 33' umgelenkt wird. Bei dieser Anlage wird der Waffelteig mittels einer, als Aufgießrohr ausgebildeten Aufgießvorrichtung 34 nahe der Umlenkstationen 33 auf das, eine endlose sich bewegende Backfläche bildende, obere Trum 32a des endlosen Backbandes 32 zu einem endlosen Teigband 35 aufgegossen, welches beim Durchlaufen durch den Durchlaufofen 31 zu einem dicken, endlosen, plastisch verformbaren, ebenen Waffelband gebacken wird. Das obere Trum 32a des endlosen Backbandes 32 transportiert das gebackene Waffelband 36 zu einer Bearbeitungsstation 37, die eine, mit dem obere Trum 32a des endlosen Backbandes 32 zusammenwirkende Präge- bzw. Stanzvorrichtung umfaßt, welche eine, mit der, in der Umlenkstation 33' des Backbandes 32 angeordneten, vorzugsweise beheizten Umlenkwalze 33a des Backbandes 32 als Gegenwalze zusammenwirkende Form- bzw. Prägewalze 38 umfaßt, die das auf dem oberen Trum 32a des endlosen Backbandes 32 liegende, im plastisch verformbaren Zustand befindliche, gebackene, ebene Waffelband 36 verdichtet und in einzelne, gebackene Waffelstücke bzw. Waffelfladen zerteilt, welche in der Transpartebene des oberen Trumes 32a des Backbandes 32 nebeneinanderliegen.

Wird das gebackene Waffelband von der Präge- bzw. Stanzvorrichtung in einzelne, fächerförmige Waffelstücke bzw. Waffelfladen zerteilt, so liegen diese jeweils mit ihren geraden Randkanten seitlich nebeneinander und jeweils mit der Spitze eines fächerförmigen Waffelstückes neben der bogenförmigen Randkante des benachbarten fächerförmigen Waffelstückes.

Der Bearbeitungsstation 37 ist eine Übergabevorrichtung 39 nachgeordnet, welche die einzelnen, im plastisch verformbaren Zustand befindlichen, gebackenen Waffelstücke in der aus der Form- bzw. Prägewalze 38 austretenden Anordnung übernimmt und an eine mit zwei Rollwerken 40, 41 zum tütenförmigen Einrollen der Waffelstücke versehene Verarbeitungsstation 42 weitergibt.

Fig. 5 zeigt eine Bearbeitungsstation für das gebackene endlose Waffelband 43 mit einer oberen Präge- und Ausstanzwalze 44 und einer unteren Gegenwalze 45, die in ein Ölbad 46 in einer Ölwanne 47 eintaucht und auf der Unterseite des Waffelbandes 43 bzw. der aus diesem ausgestanzten Waffelstücke einen dünnen Ölfilm aus Speiseöl aufträgt.

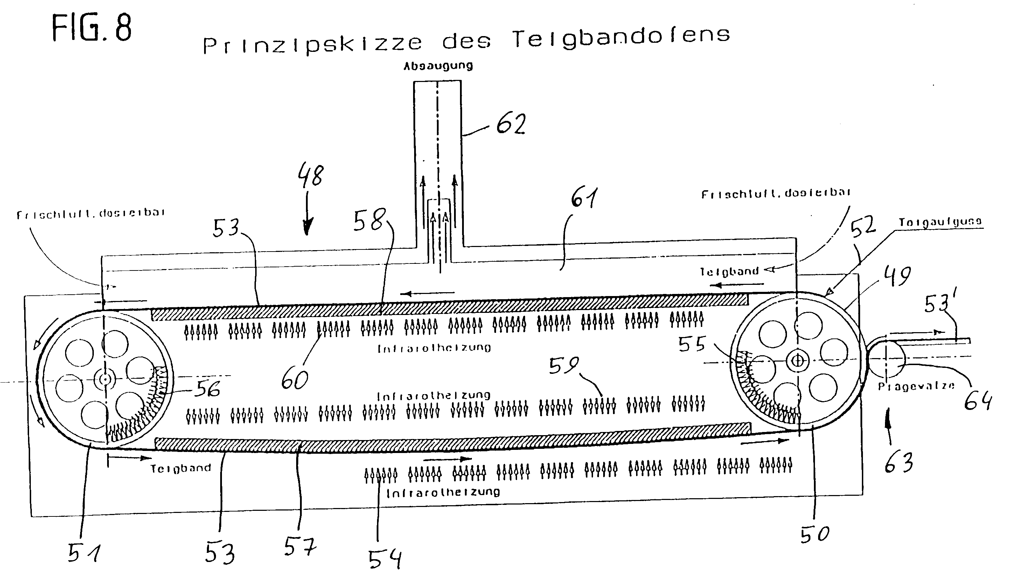

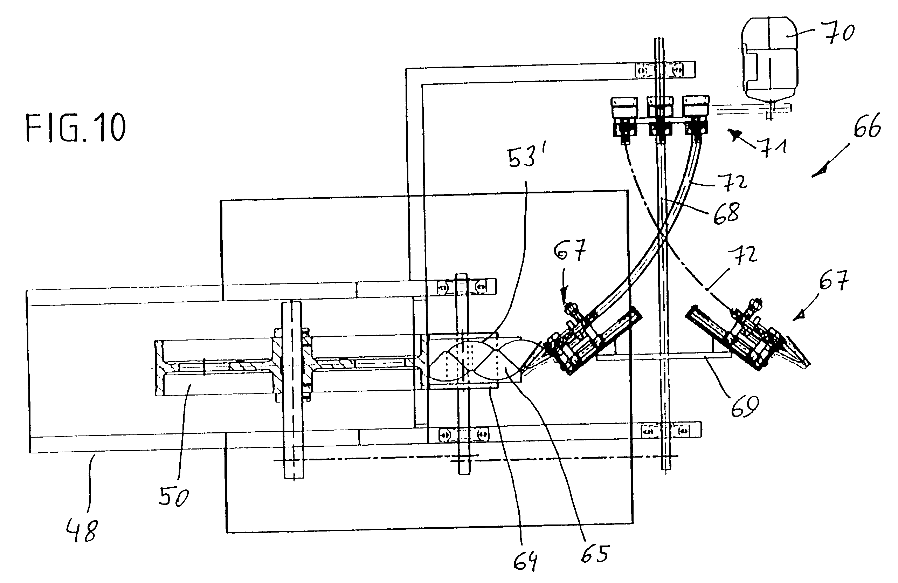

Die Fig. 8 bis 11 zeigen ein weiteres Ausführungsbeispiel einer Anlage zur Durchführung des erfindungsgemäßen Verfahrens. Diese Anlage umfaßt einen langgestreckten Backofen 48, in dessen Innerem ein endloses Backband 49 über eine vordere Umlenktrommel 50 und eine hintere Umlenktrommel 51 umläuft. Das endlose Backband 49 bildet mit seiner glatten Außenfläche eine sich kontinuierlich bewegende Backfläche, auf die im Bereich der oberen Hälfte der vorderen Umlenktrommel 50 durch eine, nur symbolisch dargestellte Teigaufgießvorrichtung 52 flüssiger Waffelteig zu einem dicken, endlosen Teigband 53 aufgegossen wird, welches über seine gesamte Länge an seiner Unterseite durch das beheizte Backband 49 (von unten) und entlang dem unteren Trum des Backbandes durch Infrarotheizungen 54 auch an seiner freien Oberseite beheizt wird. Zum Beheizen des Backbandes 49 sind die beiden Umlenktrommeln 50,51 jeweils mit einer, von innen auf den Trommelmantel wirkenden Infrarot- oder Gasbrennerheizung 55,56 versehen und zwischen den beiden Umlenktrommeln 50,51 sind jeweils der Bahn des Backbandes 49 angepaßte Strahlungsheizkörper 57,58 vorgesehen, die jeweils durch an ihrer Rückseite angeordnete Infrarot- oder Gasbrennerheizung 59,60 beheizt werden.

Oberhalb des oberen Trumes des Backbandes 49 ist ein gegenüber den Ofengasen abgeschirmter Kanal 61 vorgesehen, der mit dem Ofenabzug 62 verbunden ist. Die Temperatur im Kanal 61 wird so kühl gehalten, daß ein Ausgasen des Teigbandes 53 an seiner freien Oberseite möglich ist und das vorzeitige Ausbilden einer das Ausgasen verhindernden Haut auf der freien Oberseite des Teigbandes 53 verhindert wird. Zur Unterstützung des Ausgasens kann dem Kanal 61 an seinem vorderen und/oder hinteren Ende Frischluft zugeführt werden.

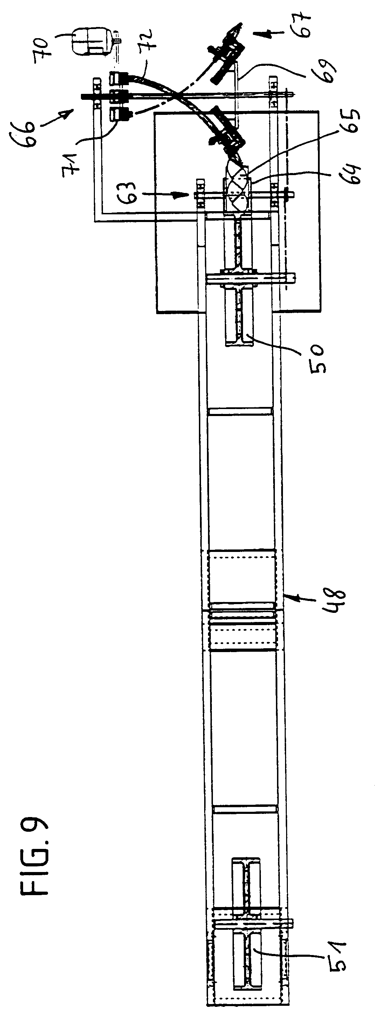

Das Teigband 53 wird im Backofen 48 zu einem dicken, endlosen, plastisch verformbaren Waffelband gebacken, das im plastisch verformbaren, warmen Zustand aus dem Backofen 48 austritt und in eine diesem unmittelbar nachgeordnete Prägestation 63 eintritt. In dieser wird das gebackene plastisch verformbare Waffelband durch eine Prägewalze 64 unter plastischer Verformung des Waffelbandes verdichtet und vom beheizten Backband 49 abgenommen. Durch die Prägewalze 64 wird das gebackene Teig- bzw. Waffelband 53' mit einem Waffelmuster und mit untereinander zusammenhängenden, die einzelnen Waffelstücke bzw. deren Umriß begrenzenden Trennfugen versehen, wobei das dicke Waffelband an den Trennfugen praktisch durchtrennt wird. Dabei entstehen neben den ebenen, kreissektorförmigen bzw. fächerförmigen Waffelstücken 65 für die Waffeltüten auch im wesentlichen dreieckige Randstücke. Anschließend werden die im wesentlichen ebenen kreissektorförmigen bzw. fächerförmigen ^Waffelstücke 65 in der nachgeordneten Rollstation 66 (Fig. 9) zu Waffeltüten eingerollt, während die ebenen im wesentlichen dreieckigen Randstücke als ebene Waffelstücke außerhalb der erfindungsgemäßen Anlage weiterverarbeitet werden.

Die von der Prägewalze 64 aus dem Waffelband 53' abgetrennten, fächerförmigen Waffelstücke 65 sind aufeinanderfolgend, jeweils spiegelbildlich zueinander angeordnet und werden der jeweiligen Tüten-Wickelvorrichtung 67 der in der Rollstation 66 angeordneten Rollvorrichtung genau ausgerichtet zugeführt. Die Tüten-Wickelvorrichtungen 67 sind um die Drehachse 68 der Rollvorrichtung am Umfang eines Drehtisches 69 gleichmäßig verteilt angeordnet, wobei einander benachbarte Wickelvorrichtungen 67 entsprechend den spiegelbildlich zueinander angeordneten, fächerförmigen Waffelstücken 65 ebenfalls spiegelbildlich zueinander angeordnet sind. Der Drehtisch 69 wird um die im wesentlichen horizontale und zur Transportrichtung der Waffelstücke senkrechte Drehachse 68 in Abhängigkeit von der Umlaufgeschwindigkeit des Backbandes 49 gedreht. Die Wickelvorrichtungen 67 werden von einen Motor 70 über einen Getriebekopf 71 und von diesem wegführenden flexiblen Antriebswellen 72 angetrieben.

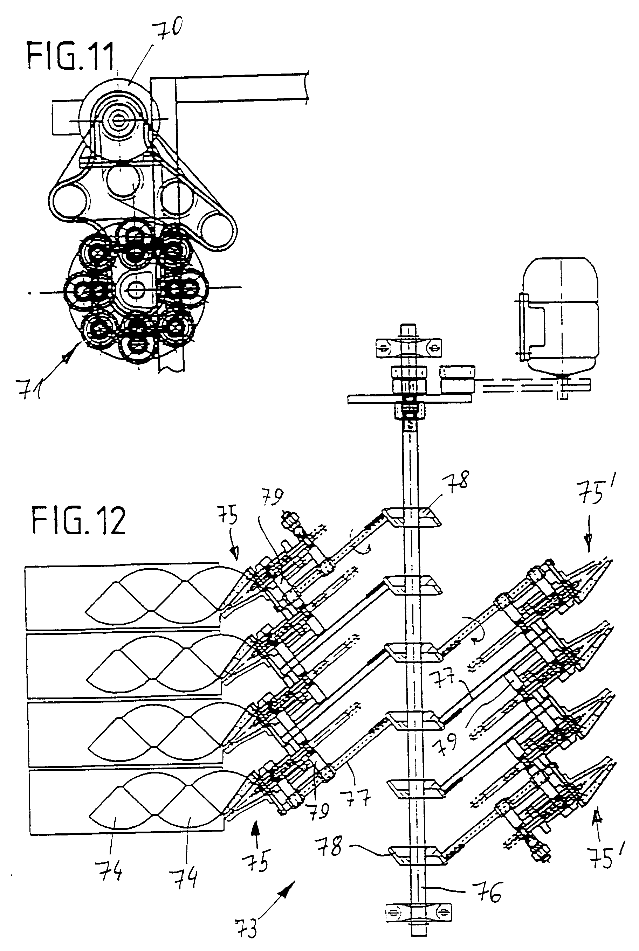

Die Fig. 12 zeigt schematisch eine Rollvorrichtung 73 für vier nebeneinander angeordnete, gebackene Teig- bzw. Waffelbänder, die durch nicht dargestellte Prägewalzen in fächerförmige Waffelstücke 74 geteilt wurden, die von den Tüten-Wickelvorrichtungen 75,75' zu Waffeltüten gewickelt werden.

Die Tüten-Wickelvorrichtungen 75,75' sind um die Drehachse 76 der Rollvorrichtung 73 herum, über deren Umfang gleichmäßig verteilt angeordnet. Einander benachbarte Wickelvorrichtungen 75,75' sind entsprechend den spiegelbildlich zueinander angeordneten, fächerförmigen Waffelstücken 74 ebenfalls spiegelbildlich zueinander angeordnet und gegeneinander, je nach der Anzahl der über den Umfang verteilt angeordneten Wickelvorrichtungen, jeweils um 45 oder 90 Winkelgrade versetzt angeordnet. In der Fig. 12 sind die gegenüber den Wickelvorrichtungen 75 spiegelbildlich angeordneten Wickelvorrichtungen 75' der besseren Darstellung wegen diesen gegenüberliegend dargestellt. Jede einem Waffelband zugeordnete Wickelvorrichtung 75,75' ist über einen eigenen Trägerstab 77 mit einer auf der Drehachse 68 drehbar gelagerten Nabe 78 verbunden, mit der auch alle anderen demselben Waffelband zugeordneten Wickelvorrichtungen 75,75' verbunden sind. Darüberhinaus sind auch die benachbarten Waffelbändern zugeordneten und in einer gemeinsamen Radialebene angeordneten Wickelvorrichtungen 75, 75' der Rollvorrichtung untereinander jeweils durch einen Querträger 79 verbunden.

## Patentansprüche

1. Verfahren zum Herstellen von Waffeln für Eiscreme, wie gerollte Waffeltüten, tiefgezogene gerollte Waffelrollen, tiefgezogene Waffelbecher, tiefgezogene Waffeltassen und dergleichen, bei welchem Verfahren ein hoch zuckerhaltiger Teig auf einer endlosen, sich kontinuierlich bewegenden, beheizten Backfläche zu einem endlosen Waffelband gebacken wird, welches im plastisch verformbaren Zustand in einzelne Waffelstücke zerteilt wird, die ihrerseits im plastisch verformbaren Zustand in die, für die Waffeln vorgesehene, dreidimensionale Gestalt umgeformt werden, dadurch gekennzeichnet, daß der hoch zuckerhaltige Teig zu einem dicken Teigband auf die endlose, beheizte Backfläche aufgegossen wird und auf dieser zu einem dicken, vorzugsweise ein bis mehrere Millimeter dicken Waffelband gebacken wird und daß das gebackene Waffelband im plastisch verformbaren Zustand, vorzugsweise bis auf maximal zwei Drittel seiner ursprünglichen Dicke, verdichtet und entweder gleichzeitig mit dem Verdichten oder nach dem Verdichten in die einzelnen Waffelstücke zerteilt wird.

2. Verfahren nach Anspruch 1, dadurch gekennzeichnet, daß das Teigband während der gesamten Backzeit an seiner Unterseite durch die endlose, sich kontinuierlich bewegende, beheizte Backfläche beheizt wird, während seine Oberseite zuerst zum ungehinderten Ausgasen unbeheizt bleibt und zumindest im letzten Viertel der Backzeit auch an seiner Oberseite beheizt wird, um auch die Oberseite des Teigbandes zu Bräunen und um das gebackene Teigband plastisch verformbar zu machen.

3. Verfahren nach Anspruch 1 oder 2, dadurch gekennzeichnet, daß der flüssige Waffelteig 25 bis 100 Gew.-% Zucker, bezogen auf den Mehl- bzw. Stärkeanteil enthält.

4. Verfahren nach einem der Ansprüche 1 bis 3, dadurch gekennzeichnet, daß der Waffelteig in zwei oder mehreren Schritten mehrschichtig aufgegossen wird.

5. Verfahren nach einem der Ansprüche 1 bis 4, dadurch gekennzeichnet, daß der Waffelteig in Vertiefungen der sich bewegenden heißen Backfläche zu einem endlosen Teigband aufgegossen wird, wobei die Vertiefungen der Backfläche eine Randkontur besitzen, die bereits jener der beim Zerteilen des gebackenen Waffelbandes entstehenden, gebackenen Waffelstücke entspricht.

6. Verfahren nach einem der Ansprüche 1 bis 5, dadurch gekennzeichnet, daß der Gießstrahl des Waffelteiges zur Bildung eines endlosen Teigbandes, das in seinen Randkonturen aufeinanderfolgende Bagenstücke aufweist, während des Aufgießens quer zur Bewegungsrichtung der heißen Backfläche hin und her bewegt wird.

7. Verfahren nach einem der Ansprüche 1 bis 6, dadurch gekennzeichnet, daß das dicke, gebackene Waffelband in seinem plastisch verformbaren Zustand durch Walzen verdichtet wird.

8. Verfahren nach einem der Ansprüche 1 bis 6, dadurch gekennzeichnet, daß das dicke, gebackene Waffelband in seinem plastisch verformbaren Zustand durch Walzprägen verdichtet wird.

9. Verfahren nach Anspruch 8, dadurch gekennzeichnet, daß die Verdichtung im wesentlichen nur durch die erhabenen Teile der Prägewalze erfolgt.

10. Verfahren nach einem der Ansprüche 1 bis 9, dadurch gekennzeichnet, daß beim Verdichten des dicken, gebackenen Waffelbandes in seinem plastisch verformbaren Zustand gleichzeitig ein Muster auf dieses Waffelband aufgeprägt wird.

11. Verfahren nach einem der Ansprüche 1 bis 10, dadurch gekennzeichnet, daß die Verdichtung bei einer Temperatur erfolgt, die in etwa der Backtemperatur entspricht.

12. Anlage zum Herstellen von Waffeln für Eiscreme, wie gerollte Waffeltüten, gerollte Waffelrollen, tiefgezogene Waffelbecher, tiefgezogene Waffeltassen und dergleichen, mit einer Erzeugungsstatian (1, 16, 31, 48) zum Herstellen von im wesentlichen ebenen, im backwarmen Zustand plastisch verformbaren Waffelstücken (26, 35, 74) und einer nachgeordneten Verarbeitungsstation (5, 27, 42, 66, 73), in der die im wesentlichen ebenen Waffelstücke (26, 35, 74) im plastisch verformbaren Zustand in die für die Waffeln vorgesehene dreidimensionale Gestalt umgeformt werden, wobei in der Erzeugungsstatian eine Backvorrichtung (1, 16, 31, 48) zum Herstellen eines endlosen, im backwarmen Zustand plastisch verformbaren Waffelbandes (22, 36, 43, 53') aus hoch zuckerhaltigem Teig vorgesehen ist, welche eine endlose, sich kontinuierlich bewegende, beheizte Backfläche (8, 20, 21, 32a, 49) umfaßt, entlang deren Bahn zumindest eine Teigaufgießvorrichtung (9, 10, 23, 34, 52) zum Aufgießen des Teiges auf die Backfläche (8, 20, 21, 32a, 49) und eine beheizte Backstrecke (11, 12, 24, 54, 55, 56, 57, 58, 59, 60) zum Backen des aufgegossenen Teigbandes (13, 27, 35, 53) in Bewegungsrichtung der Backfläche (8, 20, 21, 32a, 49) hintereinander angeordnet sind, dadurch gekennzeichnet, daß die Erzeugungsstation eine Backvorrichtung (1, 16, 31, 48) zum Herstellen eines dicken, vorzugsweise ein bis mehrere Millimeter dicken Waffelbandes (22, 36, 43, 53') und eine Bearbeitungsstation (3, 25, 37, 63) für dieses Waffelband (22, 36, 43, 53') umfaßt, in der das gebackene Waffelband (22, 36, 43, 53') verdichtet und gleichzeitig mit dem Verdichten oder nach dem Verdichten in einzelne Waffelstücke (26, 35, 74) zerteilt wird, die in der Verarbeitungsstation (5, 27, 42, 66, 73) im plastisch verformbaren Zustand in die für die Waffeln vorgesehene dreidimensionale Gestalt umgeformt werden.

13. Anlage nach Anspruch 12, dadurch gekennzeichnet, daß die Bearbeitungsstation (3, 25, 37, 63) für das dicke, gebackene Waffelband (22, 36, 53') an der Bahn der sich bewegenden Backfläche (8, 20, 32a, 49) der Backvorrichtung (1, 16, 31, 48) angeordnet ist und der beheizten Backstrecke (11, 12, 24, 54, 55, 56, 57, 58, 59, 60) der Backvorrichtung (1, 16, 31, 48) nachgeordnet ist.

14. Anlage nach Anspruch 13, dadurch gekennzeichnet, daß in der Bearbeitungsstation (3, 37, 63) für das dicke gebackene Waffelband (36, 53') eine Prägewalze (15, 38, 64) für den Eingriff mit der Oberseite des, mit seiner Unterseite auf der endlosen Backfläche (8, 32a, 49) aufliegenden, gebackenen Waffelbandes (36, 53') vorgesehen ist.

15. Anlage nach Anspruch 13 oder 14, dadurch gekennzeichnet, daß die Bearbeitungsstation (3, 25) für das dicke, gebackene Waffelband (22) dieses in die einzelnen Waffelstücke (26) zerteilt und die Verarbeitungsstation (27) eine die einzelnen Waffelstücke (26) aus der Bearbeitungsstation (3, 25) entfernende Abnahmevorrichtung (4, 30) umfaßt.

16. Anlage nach Anspruch 12, dadurch gekennzeichnet, daß die Bearbeitungsstation (25) für das dicke, gebackene Waffelband (22) der Backvorrichtung (16) nachgeordnet ist und eine mit der Oberseite des gebackenen Waffelbandes (22) in Eingriff bringbare Prägewalze (29, 44) und eine mit der Unterseite des gebackenen Waffelbandes (22) in Eingriff bringbare Gegenwalze (28, 45) umfaßt.

17. Anlage nach Anspruch 16, dadurch gekennzeichnet, daß die Gegenwalze (28, 45) als Beölungswalze für die Unterseite des Waffelbandes (22) bzw. der Waffelstücke (26) ausgebildet ist.

18. Anlage nach einem der Ansprüche 14 bis 17, dadurch gekennzeichnet, daß die Prägewalze (15, 29, 38, 44, 45, 64) mit der Form der Waffelstücke entsprechenden Schneidkanten versehen ist.

19. Anlage nach einem der Ansprüche 14 bis 18, dadurch gekennzeichnet, daß die Prägewalze (15, 29, 38, 44, 45, 64) mit einem Waffelprägemuster versehen ist.

20. Anlage nach einem der Ansprüche 12 bis 19, dadurch gekennzeichnet, daß zur Herstellung des dicken Waffelbandes (22) in die sich kontinuierlich bewegende, beheizte Backfläche (20) der Backvorrichtung (16) in Bewegungsrichtung der Backfläche (20) aufeinanderfolgende Vertiefungen (21) eingelassen sind, deren räumliche Gestalt den einzelnen Waffelstücken (26) entspricht.

21. Anlage nach einem der Ansprüche 12 bis 20, dadurch gekennzeichnet, daß die Backvorrichtung (1) zum Herstellen des dicken Waffelbandes eine sich mit der beheizten Backstrecke (11, 12) teilweise überschneidende Aufgießstrecke (9, 10) mit zumindest zwei, entlang der Bahn der sich bewegenden Backfläche (8) in Bewegungsrichtung der Backfläche (8) hintereinander angeordneten Teigaufgießvorrichtungen (9, 10) vorgesehen ist.

22. Anlage nach Anspruch 21, dadurch gekennzeichnet, daß die beheizte Backstrecke zwischen den Teigaufgießvorrichtungen (9, 10) der Aufgießstrecke angeordnete Infrarot-Strahlungsheizvorrichtungen (12) umfaßt.

## Claims

1. Method of producing wafers for ice-cream, such as rolled wafer cones, deep-drawn, rolled wafer rolls, deep-drawn wafer beakers, deep-drawn wafer cups and the like, in which method a batter of high sugar content is baked on an endless, continuously moving, heated baking surface to form an endless wafer strip which is divided, in the plastically deformable state, into individual wafer pieces which, in turn, are moulded, in the plastically deformable state, into the three-dimensional shape intended for the wafers, characterized in that the batter of high sugar content is poured onto the endless, heated baking surface to form a thick batter strip and is baked on the said baking surface to form a thick, preferably one or more millimetres thick, wafer strip, and in that the baked wafer strip is compacted in the plastically deformable state, preferably to a maximum of two thirds of its original thickness and is divided into the individual wafer pieces either at the same time as the compacting operation or after the compacting operation.

2. Method according to Claim 1, characterized in that the batter strip is heated throughout the entire baking time on its underside by means of the endless, continuously moving, heated baking surface, while its top side initially remains unheated to allow unobstructed escape of gases and is also heated on its top side, at least during the final quarter of the baking time, in order also to brown the top side of the batter strip and in order to make the baked wafer strip plastically deformable.

3. Method according to Claim 1 or 2, characterized in that the liquid wafer batter contains 25 to 100% by weight of sugar in relation to the proportion of flour or starch.

4. Method according to one of Claims 1 to 3, characterized in that the wafer batter is poured on in two or more stages to form several layers.

5. Method according to one of Claims 1 to 4, characterized in that the wafer batter is poured into depressions in the moving hot baking surface to form an endless batter strip, the depressions in the baking surface having an edge contour which already corresponds to that of the baked wafer pieces obtained from the division of the baked wafer strip.

6. Method according to one of Claims 1 to 5, characterized in that the pouring flow of the wafer batter to form an endless batter strip, which has successive curved pieces in its edge contours, is moved back and forth transversely to the direction of movement of the hot baking surface during the pouring-on operation.

7. Method according to one of Claims 1 to 6, characterized in that the thick, baked wafer strip is compacted by rollers in its plastically deformable state.

8. Method according to one of Claims 1 to 6, characterized in that the thick, baked wafer strip is compacted by embossing in its plastically deformable state.

9. Method according to Claim 8, characterized in that the compacting takes place essentially only by means of the raised parts of the embossing roller.

10. Method according to one of Claims 1 to 9, characterized in that, during the compacting of the thick, baked wafer strip in its plastically deformable state, a pattern is embossed on the said wafer strip at the same time.

11. Method according to one of Claims 1 to 10, characterized in that the compacting takes place at a temperature which corresponds approximately to the baking temperature.

12. Apparatus for producing wafers for ice-cream, such as rolled wafer cones, rolled wafer rolls, deep-drawn wafer beakers, deep-drawn wafer cups and the like, having a production station (1, 16, 31, 48) to produce wafer pieces (26, 35, 74), which are essentially flat and are plastically deformable in the state at baking heat, and having a downstream processing station (5, 27, 42, 66, 73) in which the essentially flat wafer pieces (26, 35, 74) are moulded in the plastically deformable state into the three-dimensional shape intended for the wafers, a baking device (1, 16, 31, 48) being provided in the production station to produce an endless wafer strip (22, 36, 43, 53'), which is plastically deformable in the state at baking heat, made of a batter of high sugar content, which baking device comprises an endless, continuously moving, heated baking surface (8, 20, 21, 32a, 49), along the path of which there are arranged one after the other in the direction of movement of the baking surface (8, 20, 21, 32a, 49), at least one batter pouring device (9, 10, 23, 34, 52) for pouring the batter onto the baking surface (8, 20, 21, 32a, 49) and a heated baking section (11, 12, 24, 54, 55, 56, 57, 58, 59, 60) for baking the poured-on batter strip (13, 27, 35, 53), characterized in that the production station comprises a baking device (1, 16, 31, 48) for producing a thick, preferably one or more millimetres thick, wafer strip (22, 36, 43, 53') and a processing station (3, 25, 37, 63) for the said wafer strip (22, 36, 43, 53'), in which the baked wafer strip (22, 36, 43, 53') is compacted and is divided into individual wafer pieces (26, 35, 74) at the same time as the compacting operation or after the compacting operation, which wafer pieces are moulded in the plastically deformable state in the processing station (5, 27, 42, 66, 73) into the three-dimensional shape intended for the wafers.

13. Apparatus according to Claim 12, characterized in that the processing station (3, 25, 37, 63) for the thick, baked wafer strip (22, 36, 53') is arranged on the path of the moving baking surface (8, 20, 32a, 49) of the baking device (1, 16, 31, 48), and is arranged downstream of the heated baking section (11, 12, 24, 54, 55, 56, 57, 58, 59, 60) of the baking device (1, 16, 31, 48).

14. Apparatus according to Claim 13, characterized in that an embossing roller (15, 38, 64) is provided in the processing station (3, 37, 63) for the thick, baked wafer strip (36, 53') for engagement with the top side of the baked wafer strip (36, 53') which rests with its underside on the endless baking surface (8, 32a, 49).

15. Apparatus according to Claim 13 or 14, characterized in that the processing station (3, 25) for the thick, baked wafer strip (22) divides the latter into the individual wafer pieces (26), and the processing station (27) comprises a removal device (4, 30) which removes the individual wafer pieces (26) from the processing station (3, 25).

16. Apparatus according to Claim 12, characterized in that the processing station (25) for the thick, baked wafer strip (22) is arranged downstream of the baking device (16) and comprises an embossing roller (29, 44), which can be moved into engagement with the top side of the baked wafer strip (22), and a counter-roller (28, 45) which can be moved into engagement with the underside of the baked wafer strip (22).

17. Apparatus according to Claim 16, characterized in that the counter-roller (28, 45) is designed as an greasing roller for the underside of the wafer strip (22) or the wafer pieces (26).

18. Apparatus according to one of Claims 14 to 17, characterized in that the embossing roller (15, 29, 38, 44, 45, 64) is provided with cutting edges which correspond to the shape of the wafer pieces.

19. Apparatus according to one of Claims 14 to 18, characterized in that the embossing roller (15, 29, 38, 44, 45, 64) is provided with a wafer-embossing pattern.

20. Apparatus according to one of Claims 12 to 19, characterized in that, to produce the thick wafer strip (22), depressions (21) are recessed into the continuously moving, heated baking surface (20) of the baking device (16), following on from one another in the direction of movement of the baking surface (20), and their three-dimensional shape corresponds to the individual wafer pieces (26).

21. Apparatus according to one of Claims 12 to 20, characterized in that, for the baking device (1) for producing the thick wafer strip, there is provided a pouring-on section (9, 10) which partially overlaps the heated baking section (11, 12) and has at least two batter pouring-on devices (9, 10) arranged along the path of the moving baking surface (8) one after the other in the direction of movement of the baking surface (8).

22. Apparatus according to Claim 21, characterized in that the heated baking section comprises infrared radiation heating devices (12) arranged between the batter pouring-on devices (9, 10) of the pouring-on section.

## Revendications

1. Procédé pour la fabrication de gaufres pour crème glacée, telles que des pochettes gaufrées laminées, des rouleaux gaufrés laminés emboutis, des godets gaufrés emboutis, des pots gaufrés emboutis et similaires, procédé dans lequel une pâte à forte teneur en sucre est cuite en une bande de gaufres sans fin sur une surface sans fin de cuisson qui est chauffée et se déplace en continu, laquelle bande de gaufres est divisée à l'état plastiquement déformable en pièces individuelles de gaufre, lesquelles pièces de gaufre sont ensuite façonnées à l'état plastiquement déformable dans la forme tridimensionnelle prévue pour les gaufres, caractérisé en ce que la pâte à forte teneur en sucre est versée en bande épaisse de pâte sur la surface sans fin de cuisson chauffée et est cuite sur celle-ci pour fournir une bande de gaufres épaisse, d'une épaisseur pouvant de préférence atteindre plusieurs millimètres, et en ce que la bande de gaufres cuite, à l'état plastiquement déformable, est compactée jusqu'à de préférence au plus les deux tiers de son épaisseur initiale, et est découpée en les gaufres individuelles pendant le compactage ou après le compactage.

2. Procédé selon la revendication 1, caractérisé en ce que, pendant toute sa cuisson, la bande de pâte est chauffée sur sa face inférieure par la surface sans fin de cuisson qui est chauffée et se déplace en continu, tandis que sa face supérieure reste tout d'abord non chauffée pour permettre son dégazage sans obstacle, la bande de pâte étant également chauffée sur sa face supérieure pendant le dernier quart de la durée de la cuisson, pour brunir également la face supérieure de la bande de pâte et rendre plastiquement déformable la bande de pâte cuite.

3. Procédé selon les revendications 1 ou 2, caractérisé en ce que la pâte à gaufres liquide contient de 25 à 100% en poids de sucre, ce poids étant calculé sur la teneur en farine ou en amidon.

4. Procédé selon l'une des revendications 1 à 3, caractérisé en ce que la pâte à gaufres est versée en plusieurs couches, en deux ou plusieurs étapes.

5. Procédé selon l'une des revendications 1 à 4, caractérisé en ce que la pâte à gaufres est versée sous la forme d'une bande de pâte sans fin dans des creux de la surface de cuisson chauffée en déplacement, les creux de la surface de cuisson présentant un bord dont le contour qui correspond déjà à chacune des pièces de gaufre cuites obtenues par découpe de la bande de gaufres cuite.

6. Procédé selon l'une des revendications 1 à 5, caractérisé en ce que pendant la coulée, le filet de coulée de la pâte à gaufres est déplacé en va-et-vient transversalement par rapport à la direction du déplacement de la surface de cuisson chauffée, pour former une bande de pâte sans fin dont les bordures présentent un contour en arcs de cercle successifs.

7. Procédé selon l'une des revendications 1 à 6, caractérisé en ce que la bande de gaufres épaisse cuite est compactée à l'état plastiquement déformable par des cylindres.

8. Procédé selon l'une des revendications 1 à 6, caractérisé en ce que la bande de gaufres épaisse cuite est compactée à l'état plastiquement déformable, par gaufrage.

9. Procédé selon la revendication 8, caractérisé en ce que le compactage s'effectue essentiellement uniquement par les parties saillantes des cylindres de gaufrage.

10. Procédé selon l'une des revendications 1 à 9, caractérisé en ce que lors du compactage de la bande de gaufres cuite épaisse à l'état plastiquement déformable, un motif est simultanément imprimé sur cette bande de gaufres.

11. Procédé selon l'une des revendications 1 à 10, caractérisé en ce que le compactage s'effectue à une température qui correspond sensiblement à la température de cuisson.

12. Installation pour la fabrication de gaufres pour crème glacée, tels que des pochettes gaufrées laminées, des rouleaux gaufrés laminés emboutis, des pots gaufrés emboutis, des godets gaufrés emboutis et similaires, comportant un poste de création (1, 16, 31, 48) pour la fabrication de pièces de gaufre (26, 35, 74) essentiellement planes à l'état plastiquement déformable à la température de cuisson, suivi d'un poste de transformation (5, 27, 42, 66, 73) dans lequel les pièces de gaufre essentiellement planes (26, 35, 74), à l'état plastiquement déformable, sont façonnées en la forme tridimensionnelle prévue pour les gaufres, tandis que dans le poste de création est prévu un dispositif de cuisson (1, 16, 31, 48) pour la fabrication d'une bande sans fin de gaufres (22, 36, 43, 53') en pâte à forte teneur en sucre, à l'état plastiquement déformable à la température de cuisson, qui comporte une surface sans fin de cuisson (8, 20, 21, 32a, 49) qui est chauffée et se déplace en continu, dans le parcours de laquelle sont disposés au moins un dispositif de coulée de pâte (9, 10, 23, 34, 52) pour verser la pâte sur la surface de cuisson (8, 20, 21, 32a, 49) et un parcours chauffé de cuisson (11, 12, 24, 54, 55, 56, 57, 58, 59, 60) pour la cuisson de la bande de pâte (13, 27, 35, 53) versée, qui sont disposés l'un derrière l'autre dans la direction du déplacement de la surface de cuisson (8, 20, 21, 32a, 49), caractérisée en ce que le poste de création comporte un dispositif de cuisson (1, 16, 31, 48) pour la préparation d'une épaisse bande de gaufres (22, 36, 43, 53') dont l'épaisseur peut de préférence atteindre plusieurs millimètres, et un poste de transformation (3, 25, 37, 63) de cette bande de gaufres (22, 36, 43, 53'), dans lequel la bande de gaufres cuite (22, 26, 43, 53') est compactée et est divisée en pièces individuelles de gaufre (26, 35, 74) en même temps que le compactage ou après le compactage, lesquelles pièces individuelles de gaufre sont façonnées à l'état plastiquement déformable dans le poste de traitement (5, 27, 42, 66, 73) en la forme tridimensionnelle prévue pour les gaufres.

13. Installation selon la revendication 12, caractérisée en ce que le poste de transformation (3, 25, 37, 63) de l'épaisse bande de gaufres cuite (22, 36, 53') est disposée sur le parcours de la surface mobile de cuisson (8, 20, 32a, 49) du dispositif de cuisson (1, 16, 31, 48), le parcours de cuisson chauffé (11, 12, 24, 54, 55, 56, 57, 58, 59, 60) du dispositif de cuisson (1, 16, 31, 48) étant disposé en aval.

14. Installation selon la revendication 13, caractérisée en ce que dans le poste de transformation (3, 37, 63) de l'épaisse bande de gaufres cuite (36, 53') est prévu un cylindre d'emboutissage (15, 38, 64) servant à s'engager sur la face supérieure de la bande de gaufres (36, 53') cuite dont la face inférieure repose sur la surface sans fin de cuisson (8, 32a, 49).

15. Installation selon les revendications 13 ou 14, caractérisée en ce que le poste de transformation (3, 25) de l'épaisse bande de gaufres cuite (22) divise cette dernière en pièces individuelles de gaufre (26), et le poste de traitement (27) comporte un dispositif d'évacuation (4, 30) éloignant les pièces individuelles de gaufre (26) du poste de transformation (3, 25).

16. Installation selon la revendication 12, caractérisée en ce que le poste de transformation (25) de l'épaisse bande de gaufres cuite (22) est disposé en aval du dispositif de cuisson (16) et comporte un cylindre d'emboutissage (29, 44) qui peut être engagé sur la face supérieure de la bande de gaufres cuite (22), et un contre-cylindre (28, 45) qui peut être amené à s'engager sur la face inférieure de la bande de gaufres cuite (22).

17. Installation selon la revendication 16, caractérisée en ce que le contre-cylindre (28, 45) est configuré comme cylindre de lubrification de la face inférieure de la bande de gaufrés (22) ou des pièces de gaufre (26).

18. Installation selon l'une des revendications 14 à 17, caractérisée en ce que le cylindre d'emboutissage (15, 29, 38, 44, 45, 64) est doté de lames de découpe correspondant à la forme des pièces de gaufre.

19. Installation selon l'une des revendications 14 à 18, caractérisée en ce que le cylindre d'emboutissage (15, 29, 38, 44, 45, 64) est doté d'un motif d'emboutissage des gaufres.

20. Installation selon l'une des revendications 12 à 19, caractérisée en ce que pour la fabrication de l'épaisse bande de gaufres (22), des renfoncements (21) se succédant dans la direction du déplacement de la surface de cuisson (20) sont pratiqués dans la surface de cuisson (20) qui est chauffée et se déplace en continu du dispositif de cuisson (16), la forme tridimensionnelle des renfoncements correspondant aux pièces individuelles de gaufre (26).

21. Installation selon l'une des revendications 12 à 20, caractérisée en ce que le dispositif de cuisson (1) pour la fabrication de l'épaisse bande de gaufres présente un parcours de versage (9, 10) qui se superpose à une partie du parcours de cuisson chauffé (11, 12), et qui comporte au moins deux dispositifs (9, 10) de versage de pâte disposés l'un derrière l'autre dans le sens du déplacement de la surface de cuisson (8), le long du parcours de la surface de cuisson (8) en déplacement.

22. Installation selon la revendication 21, caractérisée en ce que le parcours de cuisson chauffé comporte des dispositifs chauffants (12) par rayonnement infrarouge disposés entre les dispositifs de versage de pâte (9, 10) du parcours de versage.
